(19) **Europäisches Patentamt / European Patent Office / Office européen des brevets**

(11) **EP 4 264 351 B1**

(12) **FASCICULE DE BREVET EUROPÉEN**

(45) Date de publication et mention de la délivrance du brevet:
**18.03.2026 Bulletin 2026/12**

(21) Numéro de dépôt: **21840891.2**

(22) Date de dépôt: **17.12.2021**

(51) Classification Internationale des Brevets (IPC):
*G02B 13/16* (2006.01)   *G02B 23/08* (2006.01)
*G02B 23/12* (2006.01)   *G02B 25/00* (2006.01)
*G02B 7/12* (2021.01)   *G02B 27/14* (2006.01)

(52) Classification Coopérative des Brevets (CPC):
**G02B 23/12; G02B 7/12; G02B 23/08; G02B 25/001; G02B 27/144;** G02B 27/14

(86) Numéro de dépôt international:
**PCT/EP2021/086607**

(87) Numéro de publication internationale:
**WO 2022/129583 (23.06.2022 Gazette 2022/25)**

(54) **JUMELLES DE VISION NOCTURNE**

BINOKULARES NACHTSICHTGERÄT

NIGHT VISION BINOCULARS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2020 FR 2013655**

(43) Date de publication de la demande:
**25.10.2023 Bulletin 2023/43**

(73) Titulaire: **THALES**
**92400 Courbevoie (FR)**

(72) Inventeur: **NARCY, Gabriel**
**42570 SAINT HEAND (FR)**

(74) Mandataire: **Lavoix**
**2, place d'Estienne d'Orves**
**75441 Paris Cedex 09 (FR)**

(56) Documents cités:
**FR-A- 465 592**     **US-A- 5 282 082**
**US-A1- 2010 290 112**     **US-A1- 2018 180 734**

**EP 4 264 351 B1**

## Description

La présente invention concerne des jumelles de vision nocturne.

Plus précisément, l'invention porte sur des jumelles de vision nocturne configurées pour capter et intensifier des images en provenance d'une scène. Le domaine spectral d'intensification est typiquement compris entre 450 nanomètres (nm) et 950 nm. Lorsque de telles jumelles sont configurées pour projeter des informations issues d'un écran sur l'image intensifiée, elles sont dites connectées.

Il est connu des jumelles de vision nocturne binoculaires connectées comprenant deux voies de captation, chacune associée à un oculaire. Néanmoins, seule l'une des deux voies est associée à des moyens de projection, sur l'image captée, d'informations issues d'un écran. Ainsi, les informations issues de l'écran sont visibles seulement via l'un des oculaires, ce qui est problématique lorsque cet oculaire ne correspond pas à l'œil directeur de l'utilisateur.

La projection sur l'une des deux voies seulement s'explique par les difficultés technico-économique de réalisation du mécanisme de réglage inter-pupillaire (IPD) entre les deux oculaires. En particulier, sur les jumelles de vision nocturnes disponibles sur le marché, le réglage IPD est réalisé soit par translation, soit par rotation.

Dans le cas d'un réglage IPD en translation, les deux corps de jumelles sont guidés mécaniquement par une liaison glissière sur une potence. La potence relie les deux corps de jumelles à la monture mécanique du support du casque ou du harnais de tête. Pour des jumelles de vision nocturne non-connectées (sans écran), l'alimentation du tube intensificateur passe par des nappes souples reliant les corps de jumelles à la potence ou par des contacteurs électriques sur piste.

Dans le cas de jumelles de vision nocturne connectées, les câbles d'alimentation de l'écran et de connexion aux signaux vidéos, s'ajoutent à ceux d'alimentation du tube intensificateur, ce qui rend l'intégration de telles câbles dans les corps de jumelles complexe à réaliser à la fois sur le plan technique, et économique. Les jumelles de vision nocturnes disponibles sur le marché sont, ainsi, non réglable en IPD et avec un écran sur une seule voie.

Dans le cas d'un réglage IPD en rotation, les deux corps de jumelles sont guidés mécaniquement par une liaison pivot sur une potence reliant les deux corps de jumelles à la monture mécanique du support du casque ou du harnais de tête. Ce type de réglage IPD facilite le passage des connexions par rapport aux solutions de réglage IPD par translation.

Toutefois, dans le cas des jumelles de vision nocturne connectées, ce type de réglage IPD induit une rotation des images issues de l'écran. Les images issues de l'écran sont donc perçues inclinées par l'utilisateur. Des solutions introduisant un dé-rotateur mécanique sont envisageables, mais inadaptées d'un point de vue micro-économique. Ainsi, là encore les jumelles de vision nocturne connectées disponibles sur marché sont non réglable en IPD, et avec un écran sur seulement une voie.

US 5 282 082, US 2018/180734 et US 2010/290112 décrivent des exemples de systèmes optiques d'observation de l'état de la technique. En particulier, US 5 282 082 décrit des jumelles comprenant un bloc objectif et deux oculaires. Le bloc objectif comprend un objectif, un tube intensificateur et un collimateur. US 2018/180734 décrit un système d'observation portable comprenant deux objectifs, chacun associé à un oculaire. Le système comprend un télémètre, et un dispositif d'affichage.US 2010/290112 décrit un télescope comprenant un objectif et deux oculaires.

Il existe donc un besoin pour des jumelles de vision nocturne connectées permettant la visualisation via les deux oculaires d'une image intensifiée de la scène intégrant des informations issues d'un écran, tout en étant réglable en IPD.

A cet effet, la présente description a pour objet des jumelles de vision nocturne comprenant :

    a. un ou deux blocs objectifs fixes, le ou chaque bloc objectif comprenant :

        i. un objectif de captation configuré pour capter une image d'une scène,
        ii. un dispositif à intensification de lumière configuré pour intensifier l'image captée pour obtenir une image intensifiée,
        iii. un écran propre à générer une image additionnelle,
        iv. un objectif de projection configuré pour projeter l'image additionnelle sur l'image intensifiée de sorte que le faisceau de sortie de l'objectif de projection, dit faisceau de projection, transporte l'image résultante, l'objectif de projection ayant un axe de sortie, dit axe de projection,

    b. deux oculaires à transport d'images recevant soit le même faisceau de projection lorsque les jumelles comprennent un seul bloc objectif, soit des faisceaux de projection distincts lorsque les jumelles comprennent deux blocs objectifs,

        chaque oculaire ayant un axe de sortie, dit axe de vision, les axes de vision des deux oculaires étant parallèles et séparés d'une distance ajustable, dite écartement inter-pupillaire,
        l'axe de vision de chaque oculaire étant, en outre, parallèle à l'axe de projection du bloc objectif correspondant et présentant un même entraxe non nul avec l'axe de projection du bloc objectif correspondant,
        chaque oculaire étant mobile en rotation par rapport à l'axe de projection du bloc objectif correspondant de sorte à ajuster l'écartement inter-pupillaire.

Suivant des modes de réalisation particuliers, les jumelles comprennent une ou plusieurs des caractéristiques suivantes, prise(s) isolément ou suivant toutes les combinaisons techniquement possibles :

- le faisceau de projection est un faisceau collimaté ou proche collimaté ;
- l'axe de vision de chaque oculaire est l'axe optique de l'oculaire ;

    - les jumelles comprennent deux blocs objectifs, l'écartement inter-pupillaire étant la somme d'un écartement nominal et d'une amplitude de réglage, la valeur de l'amplitude de réglage étant fonction de la rotation de chaque oculaire, et étant comprise dans un intervalle borné centré sur zéro, l'entraxe entre l'axe de vision de chaque oculaire et l'axe de projection du bloc objectif correspondant étant égal à la moitié de la borne positive de l'intervalle borné ;
    - chaque oculaire a un axe d'entrée coïncidant avec l'axe de projection du bloc objectif correspondant, l'axe de vision de chaque oculaire étant décalé de l'axe d'entrée dudit oculaire par un repliement formé de deux dioptres, chaque dioptre ayant une surface optique plane parallèle à la surface optique plane de l'autre dioptre, le premier dioptre étant configuré pour réfléchir en direction du deuxième dioptre au moins une partie du faisceau de projection en sortie du bloc objectif correspondant, le deuxième dioptre étant configuré pour réfléchir ledit faisceau de projection dans la direction de l'axe de vision ;
    - l'écartement inter-pupillaire est la somme d'un écartement nominal et d'une amplitude de réglage fonction de la rotation de chaque oculaire, l'amplitude de réglage étant fonction de l'entraxe entre l'axe de projection et l'axe de vision des oculaires, d'une orientation nominale des oculaires, et d'un angle de rotation de chaque oculaire par rapport à l'orientation nominale ;

- les jumelles comprennent deux blocs objectifs ;

    - les jumelles comprennent un seul bloc objectif de sorte que l'axe de projection est l'axe de rotation commun des deux oculaires, la surface optique plane du premier dioptre de l'un des oculaires, dit premier oculaire, étant partiellement réfléchissante de sorte à réfléchir une partie du faisceau de projection en direction du deuxième dioptre dudit premier oculaire et à transmettre l'autre partie en direction de l'autre oculaire, dit deuxième oculaire ;
    - le ou chaque bloc objectif comprend un axe d'entrée décalé de l'axe de projection de l'objectif de projection correspondant par un repliement formé de deux dioptres, chaque dioptre ayant une surface optique plane parallèle à la surface optique plane de l'autre dioptre, le premier dioptre étant compris dans l'objectif de captation, le deuxième dioptre étant compris dans l'objectif de projection et étant sur le trajet du faisceau réfléchi par le premier dioptre ;
    - l'image additionnelle est une image de la scène dans une bande spectrale différente de la bande spectrale de l'image captée par l'objectif de captation.

D'autres caractéristiques et avantages de l'invention apparaîtront à la lecture de la description qui suit de modes de réalisation de l'invention, donnés à titre d'exemple uniquement et en référence aux dessins qui sont :

[Fig 1], Figure 1, une représentation schématique d'un exemple de jumelles de vision nocturne selon un premier et un deuxième mode de réalisation,
[Fig 2], Figure 2, une représentation schématique d'un exemple de jumelles de vision nocturne selon un troisième mode de réalisation,
[Fig 3], Figure 3, une représentation schématique d'un exemple d'une voie des jumelles de vision nocturne selon le premier mode de réalisation,
[Fig 4], Figure 4, une représentation schématique de différents exemples de réglage inter-pupillaire selon le premier mode de réalisation, avec visualisation des décalages entre la pupille d'entrée des blocs objectifs et la pupille de sortie des oculaires,
[Fig 5], Figure 5, une représentation schématique d'un exemple d'une voie des jumelles de vision nocturne selon le deuxième mode de réalisation,
[Fig 6], Figure 6, une représentation schématique d'un exemple de réglage inter-pupillaire selon le deuxième mode de réalisation,
[Fig 7], Figure 7, une représentation schématique d'un exemple des deux voies des jumelles de vision nocturne selon le troisième mode de réalisation, et
[Fig 8], Figure 8, une représentation schématique d'un exemple de réglage inter-pupillaire selon le troisième mode de réalisation.

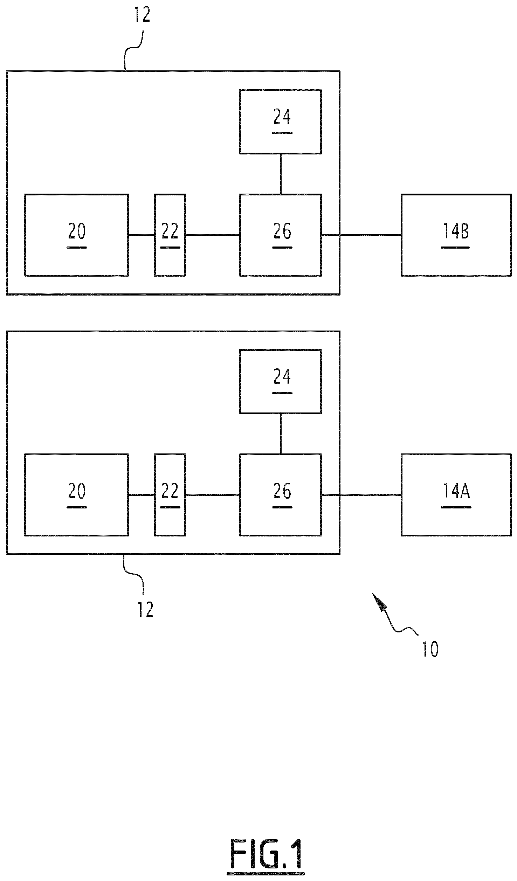

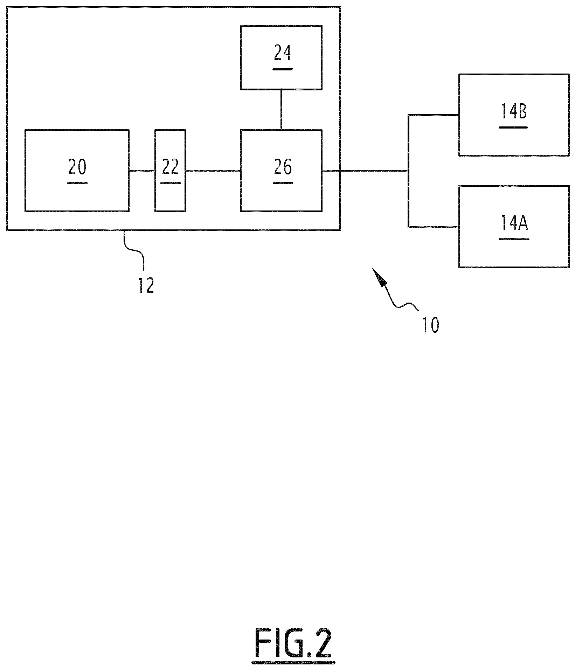

Des exemples de jumelles 10 de vision nocturne sont représentées de manière schématique sur les figures 1 et 2. La figure 1 correspond à un premier et un deuxième mode de réalisation de l'invention. La figure 2 correspond à un troisième mode de réalisation de l'invention. Comme décrit dans ce qui suit, les jumelles 10 sont des jumelles dites connectées du fait qu'elles intègrent un écran et un objectif de projection.

Dans la présente description, il est d'abord décrit les éléments communs aux trois modes de réalisation. Chaque mode de réalisation est ensuite décrit plus spécifiquement par la suite.

### *Mode de réalisation générique*

Les jumelles 10 sont, par exemple, destinées à être montées sur un casque ou un harnais de tête. Avantageusement, les jumelles 10 sont aussi destinées à être fixées à un support se réglant en vertical (haut-bas), ce qui permet d'ajuster la hauteur des jumelles 10.

Comme illustré sur les figures 1 et 2, les jumelles 10 comprennent au moins un bloc objectif 12 et deux oculaires 14A, 14B.

Lorsque les jumelles 10 comprennent deux blocs objectifs 12 distincts comme cela est le cas sur la figure 1, chaque oculaire 14A, 14B est associé à un bloc objectif 12 respectif et ne reçoit donc pas de faisceau lumineux en provenance de l'autre bloc objectif 12. Lorsque les jumelles 10 comprennent un seul bloc objectif 12 comme cela est le cas sur la figure 2, le bloc objectif 12 est commun aux deux oculaires 14A, 14B.

L'association d'un oculaire 14A, 14B avec le bloc objectif 12 correspondant forme une voie optique, les jumelles 10 comportant, ainsi, deux voies optiques.

Chaque bloc objectif 12 est fixe, c'est à dire qu'il n'est pas déplaçable ni en translation, ni en rotation.

Chaque bloc objectif 12 comprend au moins les éléments suivants : un objectif de captation 20, un dispositif à intensification de lumière 22, un écran 24 et un objectif de projection 26.

L'objectif de captation 20 est configuré pour capter une image d'une scène. L'objectif de captation 20 comprend, par exemple, un assemblage de plusieurs lentilles.

Le dispositif à intensification de lumière 22 est configuré pour intensifier l'image captée pour obtenir une image intensifiée. Le dispositif à intensification de lumière 22 comprend, par exemple, un ou plusieurs tube intensificateurs.

L'écran 24 est propre à générer une image additionnelle. L'image additionnelle est destinée à apporter des informations supplémentaires à l'utilisateur des jumelles 10.

L'image additionnelle est, par exemple, une image de la scène dans une bande spectrale différente de la bande spectrale de l'image captée par l'objectif de captation 20. La bande spectrale différente est, par exemple, comprise dans une bande infrarouge (infrarouge proche, moyen ou lointain), alors que l'objectif de captation 20 est, par exemple, propre à capter des images dans la bande visible (380 nm à 780 nm) ou étendue (400nm à 900nm). L'image additionnelle est, par exemple, obtenue par une voie optique additionnelle présente dans les jumelles 10.

En variante, l'image additionnelle est issue de données obtenues par des capteurs ou par d'autres sources d'informations.

L'objectif de projection 26 est configuré pour projeter l'image additionnelle sur l'image intensifiée de sorte que le faisceau de sortie de l'objectif de projection 26, dit faisceau de projection $F_P$, transporte l'image résultante (superposition de l'image intensifiée et de l'image additionnelle). Il est à noter que seul un rayon du faisceau $F_P$ est représenté sur les figures concernées pour ne pas les surcharger.

Avantageusement, dans l'espace intermédiaire entre l'objectif de projection 26 et l'oculaire 14A, 14B correspondant, le faisceau de projection $F_P$ est un faisceau collimaté ou proche collimaté. Par le terme « collimaté », il est entendu que les rayons du faisceau de projection $F_P$ sont parallèles ou quasiment parallèles dans l'espace intermédiaire. Par le terme « proche collimaté », il est entendu que les rayons du faisceau de projection $F_P$ sont quasiment parallèles localement, c'est-à-dire sur une distance inférieure ou égale à une valeur permettant de rendre l'axe optique de chaque oculaire 14A, 14B insensible aux excentrements d'axe mécanique entre les oculaires 14A, 14B et le ou les blocs objectif 12 correspondants.

L'objectif de projection 26 a un axe de sortie, dit axe de projection $A_P$, qui est aussi l'axe de sortie du bloc objectif 12.

L'objectif de projection 26 comprend, par exemple, un assemblage de plusieurs lentilles.

Chaque oculaire 14A, 14 B est un oculaire à transport d'images, c'est à dire qu'il est propre à transporter l'image résultant de la projection jusqu'à l'œil de l'utilisateur.

Lorsque les jumelles 10 comprennent deux blocs objectifs 12 distincts, comme illustré sur la figure 1, les deux oculaires 14A, 14B reçoivent des faisceaux de projection $F_P$ distincts et transportent alors des images résultantes distinctes. Lorsque les jumelles 10 comprennent un seul bloc objectif 12, comme illustré sur la figure 2, les deux oculaires 14A, 14B reçoivent le même faisceau de projection $F_P$ et transportent alors la même image résultante.

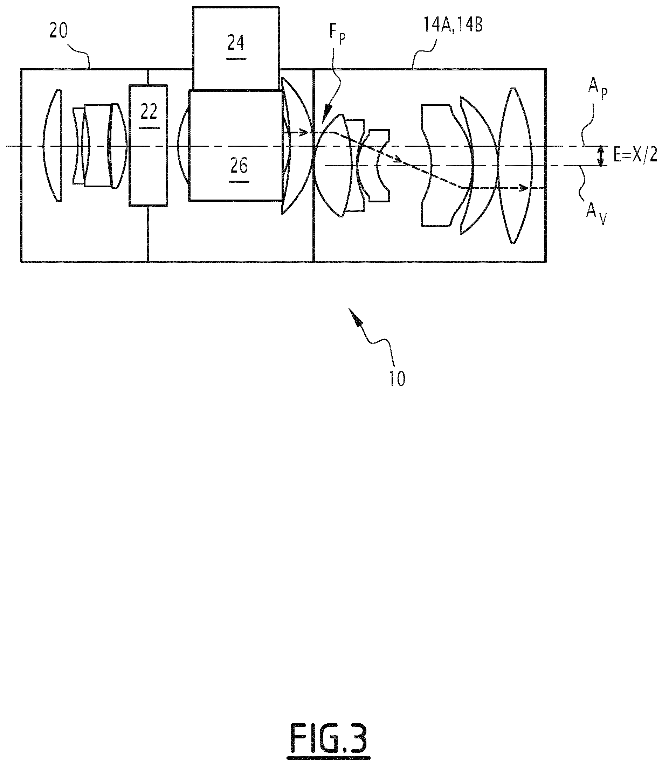

Chaque oculaire 14A, 14B a un axe de sortie, dit axe de vision $A_V$ (voir notamment les figures 3 à 8 qui seront détaillées dans la suite de la description). Les axes de vision des deux oculaires 14A, 14B sont parallèles et séparés d'une distance ajustable, dite écartement inter-pupillaire IPD. L'écartement inter-pupillaire IPD est typiquement la somme d'un écartement nominal N (fixe) et d'une amplitude de réglage R (variable).

L'axe de vision $A_V$ de chaque oculaire 14A, 14B est parallèle à l'axe de projection $A_P$ du bloc objectif 12 correspondant et présente un entraxe E non nul avec l'axe de projection $A_P$ du bloc objectif 12 correspondant. L'entraxe E est le même pour les deux oculaires 14A, 14B.

Chaque oculaire 14A, 14B est mobile en rotation par rapport à l'axe de projection $A_P$ du bloc objectif 12 correspondant de sorte à modifier l'amplitude de réglage R et ajuster, ainsi, l'écartement inter-pupillaire IPD.

Un fonctionnement des jumelles 10 commun aux trois modes de réalisation va maintenant être décrit.

Pour régler l'écartement inter-pupillaire IPD entre les oculaires 14A, 14B des jumelles 10, l'utilisateur tourne chacun des deux oculaires 14A, 14B autour de l'axe de projection $A_P$ du bloc objectif 12 correspondant. En particulier, par rapport à une configuration de réglage moyen pour lequel l'amplitude de réglage R est nulle, l'utilisateur tourne chacun des oculaires 14A, 14B vers l'extérieur pour augmenter l'écartement inter-pupillaire IPD, et vers l'intérieur pour diminuer l'écartement inter-pupillaire IPD.

Une fois l'écartement inter-pupillaire IPD ajusté, l'image résultant de la projection de l'image additionnelle sur l'image intensifiée de la scène est observable par l'utilisateur via chacun des deux oculaires 14A, 14B.

Ainsi, de telles jumelles 10 de vision nocturne connectées permettent la visualisation, via les deux oculaires 14A, 14B, de l'image résultant de la projection de l'image additionnelle sur l'image intensifiée de la scène. Cela facilite la visualisation d'une telle image par rapport aux dispositifs de l'état de la technique pour lesquels cette image résultante est observable seulement sur une voie optique.

En particulier, par rapport à des jumelles de l'état de la technique intégrant un réglage inter-pupillaire par translation, l'ajustement de l'écartement inter-pupillaire IPD par un mécanisme de rotation facilite l'intégration des câbles d'alimentation du dispositif d'intensification de lumière 22 et de l'écran 24 dans les jumelles 10. Les câbles ne passent, ainsi, pas par les oculaires 14A, 14BB et sont indépendants du mécanisme de réglage inter-pupillaire.

En outre, par rapport à des jumelles de l'état de la technique intégrant un réglage inter-pupillaire par rotation, le réglage inter-pupillaire n'a pas d'impact sur l'image résultante de la scène. Cela s'explique par le fait que seuls les oculaires 14A, 14B sont mobiles, alors que le ou les blocs objectifs 12 qui intègrent l'écran 24 sont fixes.

Ainsi, les jumelles 10 de vision nocturne connectées permettent, via une dissymétrie entre l'axe de projection $A_P$ du ou de chaque bloc objectif 12 et l'axe de vision $A_V$ des oculaires 14A, 14B correspondants, de visualiser l'image résultante sur chacun des deux oculaires 14A, 14B, tout en étant réglable en IPD.

Une telle architecture est adaptable aussi bien pour des jumelles binoculaires que pour des jumelles bioculaires. En particulier, elle permet de réaliser des jumelles de vision nocturne à fusion optique (voie intensifiée et voie infrarouge) avec une seule voie de captation infrarouge redistribuée sur les deux voies de projection (droite, gauche) et compatible d'un réglage inter-pupillaire sur les deux voies.

En outre, lorsque le faisceau dans l'espace intermédiaire est collimaté ou proche collimaté, la tenue du parallélisme est facilitée entre les deux voies droite et gauche après réalisation du réglage inter-pupillaire.

### Premier mode de réalisation

Dans ce qui suit, les spécificités des jumelles 10 selon le premier mode de réalisation sont décrites en référence aux figures 1, 3 et 4.

Comme indiqué précédemment, les jumelles 10 selon le premier mode de réalisation comprennent deux blocs objectifs 12. De tels blocs objectifs 12 sont avantageusement identiques. L'axe optique de chaque bloc objectif 12 est avantageusement confondu avec l'axe de projection $A_P$ de l'objectif de projection 26 dudit bloc objectif 12.

Selon le premier mode de réalisation, l'axe de vision $A_V$ de chaque oculaire 14A, 14B est confondu avec l'axe optique dudit oculaire 14A, 14B. Ainsi, l'axe d'entrée de chaque oculaire 14A, 14B et l'axe de vision $A_V$ dudit oculaire 14A, 14B sont confondus.

Selon le premier mode de réalisation, l'amplitude de réglage R a une valeur comprise dans un intervalle borné [-X ; +X] centré sur zéro. La borne maximale +X de l'intervalle est ainsi égale à l'opposé de la borne minimale -X de l'intervalle. Comme illustré par la figure 3, l'entraxe E entre l'axe de vision $A_V$ de chaque oculaire 14A, 14B et l'axe de projection $A_P$ du bloc objectif 12 correspondant est égal à la moitié $+\dfrac{X}{2}$ de la borne positive +X de l'intervalle borné (borne maximale).

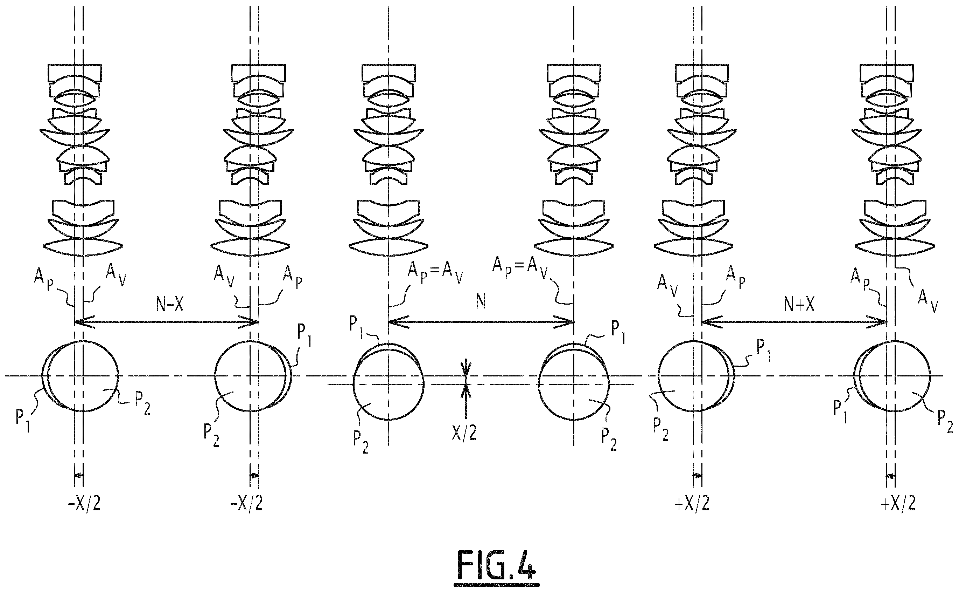

La figure 4 illustre trois configurations obtenues par rotation de chaque oculaire 14A, 14B autour de l'axe de projection $A_P$ correspondant, de sorte à obtenir différents ajustements de l'écartement inter-pupillaire IPD. En particulier, sur cette figure, il est aussi représentées les pupilles de sortie $P_1$ des blocs objectifs 12 et les pupilles de sortie $P_2$ des oculaires 14A, 14B.

La configuration du milieu (réglage moyen) correspond à un écartement moyen pour lequel l'écartement IPD est égal à l'écartement nominal N, l'amplitude de réglage R étant nulle. Dans cette configuration, l'excentrement relatif des oculaires 14A, 14B est orienté en vertical, et ne contribue pas au réglage de l'écartement IPD. Dans la configuration illustrée, l'excentrement est orienté vers le bas. Toutefois, un excentrement vers le haut est également possible. Lorsque les jumelles 10 sont fixées à un support se réglant en vertical (haut-bas), une translation des jumelles 10 sur son support permet de compenser l'excentrement vertical.

La configuration de gauche correspond à un écartement IPD minimal pour lequel l'amplitude de réglage R est égale à la borne inférieure -X de l'intervalle borné [-X ; +X]. L'écartement IPD est alors égal à N-X. Par rapport au réglage moyen (configuration du milieu), l'excentrement de chaque oculaire 14A, 14B, par rapport au bloc objectif 12 correspondant 14B est orienté vers l'intérieur.

La configuration de droite correspond à un écartement IPD maximal pour lequel l'amplitude de réglage R est égale à la borne supérieure +X de l'intervalle borné [-X ; +X]. L'écartement IPD est alors égal à N+X. Par rapport au réglage moyen (configuration du milieu), l'excentrement de chaque oculaire 14A, 14B, par rapport au bloc objectif 12 correspondant 14B est orienté vers l'extérieur.

Ainsi, les jumelles 10 selon le premier mode de réalisation présentent une dissymétrie réalisée par un excentrement entre les objectifs de projection et les oculaires 14A, 14B correspondants, ce qui permet le réglage inter-pupillaire et les autres avantages décrits pour le mode de réalisation général.

### *Deuxième mode de réalisation*

Dans ce qui suit, les spécificités des jumelles 10 selon le deuxième mode de réalisation sont décrites en référence aux figures 1, 5 et 6.

Comme indiqué précédemment, les jumelles 10 selon le deuxième mode de réalisation comprennent deux blocs objectifs 12 (un par oculaire 14A, 14B). De tels blocs objectifs 12 sont avantageusement identiques.

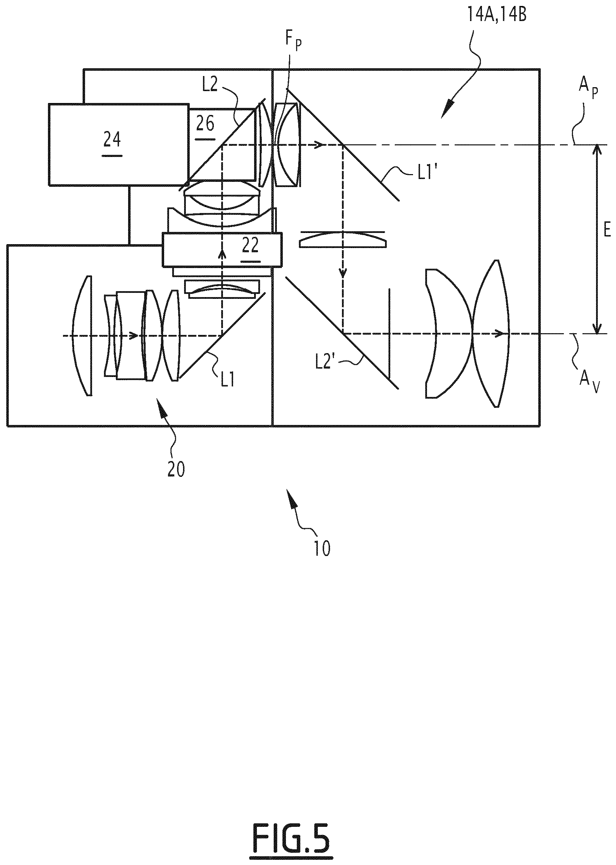

Dans l'exemple spécifique illustré par la figure 5, l'axe d'entrée de chaque bloc objectif 12 est non-coïncidant avec l'axe de projection $A_P$ de l'objectif de projection 26 dudit bloc objectif 12.

En particulier, dans cet exemple, l'axe d'entrée de chaque bloc objectif 12 est décalé de l'axe de projection $A_P$ de l'objectif de projection 26 correspondant par un repliement formé de deux dioptres L1, L2. Dans cet exemple, chaque dioptre L1, L2 a une surface optique plane qui est parallèle à la surface optique plane de l'autre dioptre. Un tel repliement est aussi appelé repliement de type rhomboèdre. Le premier dioptre L1 est compris dans l'objectif de captation 20 et est propre à réfléchir l'image captée et intensifiée de la scène en direction du deuxième dioptre L2. Le deuxième dioptre L2 est compris dans l'objectif de projection 26 et est sur le trajet du faisceau réfléchi par le premier dioptre L1.

Dans cet exemple, la surface optique plane du deuxième dioptre L2 est partiellement réfléchissante de sorte à, d'une part, réfléchir le faisceau en provenance du premier dioptre L1 et à, d'autre part, transmettre le faisceau en provenance de l'écran 24 de sorte que les deux faisceaux soient superposés dans la direction de l'axe de projection $A_P$ en sortie du deuxième dioptre L2. Le premier dioptre L1 est, par exemple, un miroir réfléchissant.

L'homme du métier comprendra que le deuxième mode de réalisation n'est pas limité à une telle configuration des blocs objectifs 12, et fonctionne quelle que soit la configuration des blocs objectifs 12. Ainsi, en variante, l'axe d'entrée de chaque bloc objectif 12 est coïncidant avec l'axe de projection $A_P$ de l'objectif de projection 26 dudit bloc objectif 12, comme cela est le cas dans le premier mode de réalisation.

Selon le deuxième mode de réalisation et comme illustré par la figure 5, chaque oculaire 14A, 14B a un axe d'entrée coïncidant avec l'axe de projection $A_P$ du bloc objectif 12 correspondant. L'axe de vision $A_V$ (axe de sortie) de chaque oculaire 14A, 14B est décalé de l'axe d'entrée dudit oculaire 14A, 14B par un repliement formé de deux dioptres L1', L2'. Dans cet exemple, chaque dioptre L1', L2' a une surface optique plane qui est parallèle à la surface optique plane de l'autre dioptre. Un tel repliement est aussi appelé repliement de type rhomboèdre. L'axe d'entrée du rhomboèdre (et donc de l'oculaire) est centré sur l'axe de projection $A_P$ de l'objectif de projection 26 correspondant.

En particulier, le premier dioptre L1' est positionnée de sorte à être sur le trajet du faisceau de projection $F_P$ en sortie de l'objectif de projection 26 correspondant, et à réfléchir ledit faisceau de projection $F_P$ en direction du deuxième dioptre L2'. Le deuxième dioptre L2' est positionné de sorte à réfléchir ledit faisceau de projection $F_P$ dans la direction de l'axe de vision $A_V$. Dans un exemple, le premier dioptre L1' et le deuxième dioptre L2' sont des miroirs réfléchissants.

Dans ce deuxième mode de réalisation, l'amplitude de réglage R est fonction de : l'entraxe E entre l'axe de projection $A_P$ et l'axe de vision $A_V$ de l'oculaire 14A, 14B correspondant, d'une orientation nominale $\beta$ des oculaires 14A, 14B, et d'un angle de rotation $\alpha_p$, $\alpha_n$ de chaque oculaire 14A, 14B par rapport à l'orientation nominale $\beta$. L'orientation nominale $\beta$ est définie comme étant l'angle entre le plan comprenant les deux axes de projection $A_P$ (droite et gauche) et l'axe de symétrie du rhomboèdre.

Plus précisément, l'écartement nominal N est, par exemple, donné par la formule suivante :

$$N = D + 2.E.\tan(\beta)$$

Où :

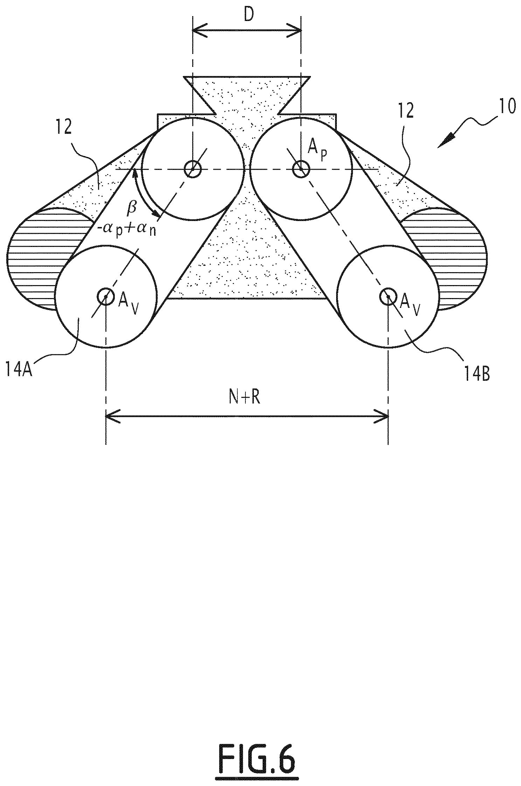

- D est l'entraxe entre les axes de projection des deux blocs objectifs 12 (visible sur la figure 6).

L'amplitude de réglage R est, par exemple, donné par la formule suivante : Où:

- $\alpha_p$ est l'angle de rotation de chaque oculaire 14A, 14B par rapport à l'orientation nominale β lors d'un écartement, et
- $\alpha_n$ est l'angle de rotation de chaque oculaire 14A, 14B par rapport à l'orientation nominale β lors d'un rapprochement.

L'ajustement du réglage inter-pupillaire est, ainsi, réalisé par rotation de chacun des oculaires 14A, 14B autour de l'axe de projection $A_P$ correspondant.

Notamment, en position de réglage moyen, la rotation relative du plan de symétrie des rhomboèdres des oculaires 14A, 14B par rapport aux blocs objectifs 12 est orientée sur l'orientation nominale β ($\alpha_p$ et $\alpha_n$ sont nuls). En position d'écartement maximum, cette rotation est orientée vers l'extérieur suivant l'angle β-$\alpha_p$. En position d'écartement minimum, cette rotation est orientée vers l'intérieur suivant l'angle β+$\alpha_n$.

Ainsi, les jumelles 10 selon le deuxième mode de réalisation présentent une dissymétrie réalisée par un repliement de type rhomboèdre des oculaires 14A, 14B, ce qui permet le réglage inter-pupillaire et les autres avantages décrits avec le mode de réalisation général.

Par rapport au premier mode de réalisation, l'amplitude de rotation des oculaires 14A, 14B, pour ajuster l'écart inter-pupillaire, est diminuée. De plus, les aberrations sont réduites car le système optique global présente une symétrie de révolution.

En outre, dans le deuxième mode de réalisation, la longueur des corps de jumelles 10 est réduite par rapport aux optiques en ligne binoculaires classiques. En conséquence, le porte-à-faux des jumelles 10 montées sur casque ou harnais de tête est réduit.

*Troisième mode de réalisation*

Dans ce qui suit, les spécificités des jumelles 10 selon le troisième mode de réalisation sont décrites en référence aux figures 2, 7 et 8.

Comme indiqué précédemment, les jumelles 10 selon le troisième mode de réalisation comprennent un seul bloc objectif 12 qui est donc commun aux deux oculaires 14A, 14B. En particulier, l'axe de projection $A_P$ est l'axe de rotation commun aux deux oculaires 14A, 14B. Le bloc objectif 12 est, par exemple, un bloc objectif selon l'un ou l'autre des exemples décrits pour le premier ou le troisième mode de réalisation.

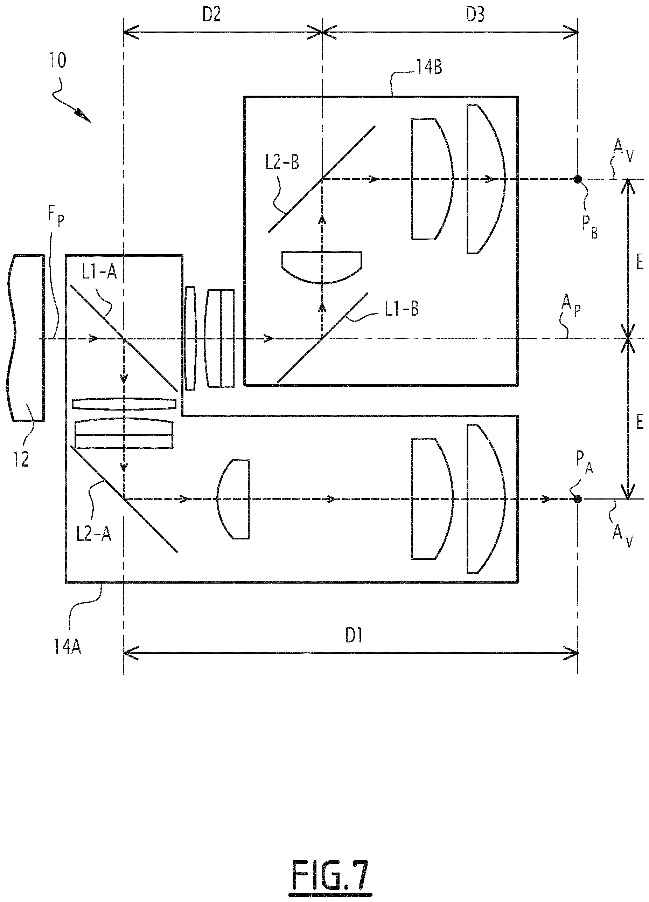

Selon le troisième mode de réalisation et comme illustré par la figure 7, chaque oculaire 14A, 14B a un axe d'entrée coïncidant avec l'axe de projection $A_P$ du même bloc objectif 12. L'axe de vision $A_V$ (axe de sortie) de chaque oculaire 14A, 14B est décalé de l'axe d'entrée dudit oculaire 14A, 14B par un repliement formé de deux dioptres : L1-A, L2-A pour l'oculaire 14A et L1-B, L2-B pour l'oculaire 14B. Chacun des dioptres L1-A, L2-A a une surface optique plane qui est parallèle à la surface optique plane de l'autre dioptre L1-A, L2-A. Chacun des dioptres L1-B, L2-B a une surface optique plane qui est parallèle à la surface optique plane de l'autre dioptre L1-B, L2-B. Comme pour le deuxième mode de réalisation, de tels repliements sont des rhomboèdres. L'axe d'entrée de chaque rhomboèdre est centré sur l'axe de projection $A_P$ de l'objectif de projection 26.

En particulier, la surface optique plane du premier dioptre L1-A du premier oculaire 14A est partiellement réfléchissant. Le premier dioptre L1-A du premier oculaire 14A est positionné de sorte à être sur le trajet du faisceau de projection $F_P$ en sortie de l'objectif de projection 26 de sorte à réfléchir une partie du faisceau de projection $F_P$ en direction du deuxième dioptre L2-A dudit premier oculaire 14A et à transmettre l'autre partie en direction du premier dioptre L1-B du deuxième oculaire 14B.

Le deuxième dioptre L2-A du premier oculaire 14A est positionné de sorte à réfléchir le faisceau de projection $F_P$ en provenance du premier dioptre L1-A dans la direction de l'axe de vision $A_V$ du premier oculaire 14A. Par exemple, le deuxième dioptre L2-A est un miroir réfléchissant.

Le premier dioptre L1-B du deuxième oculaire 14B est positionné de sorte à recevoir et réfléchir en direction du deuxième dioptre L2-B du deuxième oculaire 14B, la partie du faisceau transmise par le premier dioptre L1-A du premier oculaire 14A. Par exemple, le premier dioptre L1-A est un miroir réfléchissant.

Le deuxième dioptre L2-B du deuxième oculaire 14B est positionné de sorte à réfléchir le faisceau de projection $F_P$ en provenance du premier dioptre L1-B du deuxième oculaire 14B dans la direction de l'axe de vision $A_V$ du deuxième oculaire 14B. Par exemple, le premier dioptre L1-B est un miroir réfléchissant.

Avantageusement, l'entraxe E entre l'axe de projection $A_P$ et l'axe de vision $A_V$ de chaque oculaire 14A, 14B (qui correspond aussi à la distance entre les faces réfléchissantes de chaque rhomboèdre) vérifie la condition suivante :

$$E + D1 = D2 + E + D3$$

Où :

- D1 est la distance, selon l'axe de vision $A_V$ du premier oculaire 14A, entre le premier dioptre L1-A et le point focal $P_A$ du premier oculaire 14A,
- D2 est la distance, selon l'axe de projection $A_P$, entre le premier dioptre L1-A du premier oculaire 14A et le premier dioptre L1-B du deuxième oculaire 14B, et
- D3 est la distance, selon l'axe de vision $A_V$ du deuxième oculaire 14B, entre le deuxième dioptre L1-B et le point focal $P_B$ du deuxième oculaire 14B.

Dans ce troisième mode de réalisation, l'amplitude de réglage R est fonction de : l'entraxe E entre l'axe de projection $A_P$ et l'axe de vision $A_V$ de l'oculaire 14A, 14B correspondant, d'une orientation nominale $\beta$ des oculaires 14A, 14B, et d'un angle de rotation $\alpha_p$, $\alpha_n$ de chaque oculaire 14A, 14B par rapport à l'orientation nominale $\beta$.

Plus précisément, l'écartement nominal N est, par exemple, donné par la formule suivante :

$$N = 2.\,E.\tan(\beta)$$

L'amplitude de réglage R est, par exemple, donné par la formule suivante :

$$R = \begin{cases} 2.\,E.\tan\left(\beta - \alpha_p\right)\ lors\ d'une\ rotation\ des\ oculaires\ 14A, 14B\ vers\ l'extérieur, ou \\ -2.\,E.\tan(\beta + \alpha_n)\ lors\ d'une\ rotation\ des\ oculaires\ 14A, 14B\ vers\ l'intérieur. \end{cases}$$

Où :

- $\alpha_p$ est l'angle de rotation de chaque oculaire 14A, 14B par rapport à l'orientation nominale $\beta$ lors d'un écartement, et
- $\alpha_n$ est l'angle de rotation de chaque oculaire 14A, 14B par rapport à l'orientation nominale $\beta$ lors d'un rapprochement.

L'ajustement du réglage inter-pupillaire est, ainsi, réalisé par rotation de chacun des oculaires 14A, 14B autour de l'axe de projection $A_P$ correspondant.

Notamment, en position de réglage moyen, la rotation relative du plan de symétrie des rhomboèdres des oculaires 14A, 14B par rapport aux blocs objectifs 12 est orientée sur l'orientation nominale $\beta$ ($\alpha_p$ et $\alpha_n$ sont nuls). En position d'écartement maximum, cette rotation est orientée vers l'extérieur suivant l'angle $\beta-\alpha_p$. En position d'écartement minimum, cette rotation est orientée vers l'intérieur suivant l'angle $\beta+\alpha_n$.

Ainsi, les jumelles 10 selon le troisième mode de réalisation permettent d'obtenir un dispositif de vision bioculaire présentant une dissymétrie avec chaque oculaire 14A, 14B, réalisée par un repliement de type rhomboèdre des oculaires 14A, 14B. Cela permet le réglage inter-pupillaire et les autres avantages décrits pour le mode de réalisation général.

Par rapport au premier mode de réalisation, l'amplitude de rotation des oculaires 14A, 14B, pour ajuster l'écart inter-pupillaire, est diminuée. De plus, les aberrations sont réduites car le système optique global présente une symétrie de révolution.

En outre, dans le troisième mode de réalisation, la longueur des corps de jumelles 10 est réduite par rapport aux optiques en ligne bioculaires classiques. En conséquence, le porte-à-faux des jumelles 10 montées sur casque ou harnais de tête est réduit.

L'homme du métier comprendra que les modes de réalisation décrits précédemment sont susceptibles d'être combinés entre eux lorsque de telles combinaisons sont compatibles. En particulier, le bloc objectif 12 de type rhomboèdre décrit lors du deuxième mode de réalisation est compatible avec le premier et le troisième mode de réalisation. De même, le bloc objectif 12 en ligne décrit lors du premier mode de réalisation est compatible avec le deuxième et le troisième mode de réalisation.

En outre, l'homme du métier comprendra que le terme « axe de sortie » pour un système optique correspond à l'axe optique de l'optique en sortie du système optique, et que le terme « axe d'entrée » correspond à l'axe optique de l'optique en entrée du système optique. Ainsi, dans le cas où le système optique est centré, l'axe de sortie et l'axe d'entrée correspondent tous deux à l'axe optique du système optique. En particulier, dans les modes de réalisation décrits, l'axe de projection $A_P$ (axe de sortie du bloc objectif) est parallèle à l'axe d'entrée du bloc objectif (axe optique de l'objectif de captation 20).

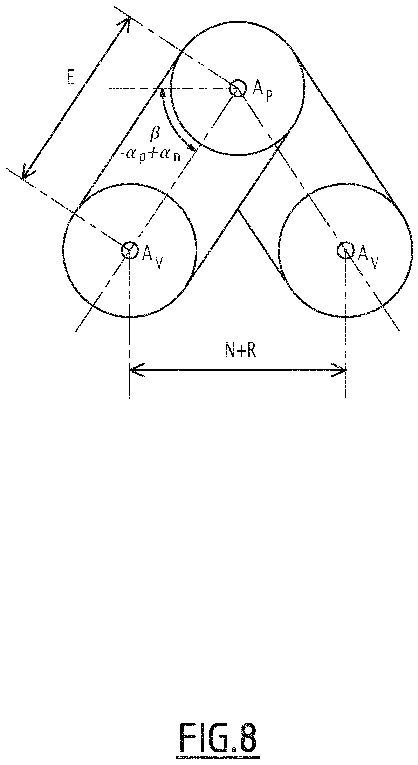

Enfin, l'homme du métier comprendra que dans le deuxième et le troisième mode de réalisation (figures 5 et 6 d'une part, et figures 7 et 8 d'autre part), l'orientation nominale désigne une orientation prise comme référence. En particulier, dans le deuxième mode de réalisation (figures 5 et 6), l'orientation nominale est l'angle $\beta$ entre le plan comprenant les deux axes de projection et l'axe de symétrie du rhomboèdre. L'axe de symétrie du rhomboèdre correspond au plan de symétrie du rhomboèdre, ce plan étant celui contenant l'axe de sortie de l'objectif de projection et l'axe de sortie de l'oculaire correspondant. Dans le troisième mode de réalisation (figures 7 et 8), comme il n'y a qu'un seul axe de projection, il est aussi possible de définir l'orientation nominale comme étant l'angle entre le plan comprenant les deux axes de sortie des oculaires (réglage inter-pupillaire en position nominale) et l'axe de symétrie du rhomboèdre.

**Revendications**

1. Jumelles (10) de vision nocturne comprenant :

    a. un ou deux bloc(s) objectif(s) (12) fixe(s), le ou chaque bloc objectif (12) comprenant :

        i. un objectif de captation (20) configuré pour capter une image d'une scène,
        ii. un dispositif à intensification de lumière (22) configuré pour intensifier l'image captée pour obtenir une image intensifiée,
        iii. un écran (24) propre à générer une image additionnelle,
        iv. un objectif de projection (26) configuré pour projeter l'image additionnelle sur l'image intensifiée de sorte que le faisceau de sortie de l'objectif de projection (26), dit faisceau de projection ($F_P$), transporte l'image résultante, l'objectif de projection (26) ayant un axe de sortie, dit axe de projection ($A_P$),

    b. deux oculaires (14A, 14B) à transport d'images recevant soit le même faisceau de projection ($F_P$) lorsque les jumelles (10) comprennent un seul bloc objectif (12), soit des faisceaux de projection ($F_P$) distincts lorsque les jumelles (10) comprennent deux blocs objectifs (12),

        chaque oculaire (14A, 14B) ayant un axe de sortie, dit axe de vision ($A_V$), les axes de vision ($A_V$) des deux oculaires (14A, 14B) étant parallèles et séparés d'une distance ajustable, dite écartement inter-pupillaire (IPD), l'axe de vision ($A_V$) de chaque oculaire (14A, 14B) étant, en outre, parallèle à l'axe de projection ($A_P$) du bloc objectif (12) correspondant et présentant un même entraxe (E) non nul avec l'axe de projection ($A_P$) du bloc objectif (12) correspondant,
        chaque oculaire (14A, 14B) étant mobile en rotation par rapport à l'axe de projection ($A_P$) du bloc objectif (12) correspondant de sorte à ajuster l'écartement inter-pupillaire (IPD).

2. Jumelles (10) selon la revendication 1, dans lesquelles le faisceau de projection ($F_P$) est un faisceau collimaté ou proche collimaté.

3. Jumelles (10) selon la revendication 1 ou 2, dans lesquelles l'axe de vision ($A_V$) de chaque oculaire (14A, 14B) est l'axe optique de l'oculaire (14A, 14B).

4. Jumelles (10) selon l'une quelconque des revendications 1 à 3, dans lesquelles les jumelles (10) comprennent deux blocs objectifs (12), l'écartement inter-pupillaire (IPD) étant la somme d'un écartement nominal (N) et d'une amplitude de réglage (R), la valeur de l'amplitude de réglage (R) étant fonction de la rotation de chaque oculaire (14A, 14B) et étant comprise dans un intervalle borné ([-X ; +X]) centré sur zéro, l'entraxe (E) entre l'axe de vision ($A_V$) de chaque oculaire (14A, 14B) et l'axe de projection ($A_P$) du bloc objectif (12) correspondant étant égal à la moitié $\left(+\frac{X}{2}\right)$ de la borne positive (+X) de l'intervalle borné.

5. Jumelles (10) de vision nocturne selon la revendication 1 ou 2, dans lesquelles chaque oculaire (14A, 14B) a un axe d'entrée coïncidant avec l'axe de projection ($A_P$) du bloc objectif (12) correspondant, l'axe de vision ($A_V$) de chaque oculaire (14A, 14B) étant décalé de l'axe d'entrée dudit oculaire (14A, 14B) par un repliement formé de deux dioptres (L1', L2'; L1-A, L2-A, L1-B, L2-B), chaque dioptre (L1', L2' ; L1-A, L2-A, L1-B, L2-B) ayant une surface optique plane parallèle à la surface optique plane de l'autre dioptre (L1', L2' ; L1-A, L2-A, L1-B, L2-B), le premier dioptre (L1'; L1-A, L1-B) étant configuré pour réfléchir en direction du deuxième dioptre (L2'; L2-A, L2-B) au moins une partie du faisceau de projection ($F_P$) en sortie du bloc objectif (12) correspondant, le deuxième dioptre (L2'; L2-A, L2-B) étant configuré pour réfléchir ledit faisceau de projection ($F_P$) dans la direction de l'axe de vision ($A_V$).

6. Jumelles (10) selon l'une quelconque des revendications 1, 2 ou 5, dans lesquelles l'écartement inter-pupillaire (IPD) est la somme d'un écartement nominal (N) et d'une amplitude de réglage (R) fonction de la rotation de chaque oculaire (14A, 14B), l'amplitude de réglage (R) étant fonction de l'entraxe (E) entre l'axe de projection ($A_P$) et l'axe de vision ($A_V$) des oculaires (14A, 14B), d'une orientation nominale (β) des oculaires (14A, 14B), et d'un angle de rotation de chaque oculaire (14A, 14B) par rapport à l'orientation nominale ($\alpha_p$, $\alpha_n$).

7. Jumelles (10) selon l'une quelconque des revendications 1 à 6, dans lesquelles les jumelles (10) comprennent deux blocs objectifs (12).

8. Jumelles (10) selon la revendication 5 ou selon la revendication 6 dans sa dépendance avec la revendication 5, dans lesquelles les jumelles (10) comprennent un seul bloc objectif (12) de sorte que l'axe de projection ($A_P$) est l'axe de rotation commun des deux oculaires (14A, 14B), la surface optique plane du premier dioptre (L1-A) de l'un des oculaires, dit premier oculaire (14A), étant partiellement réfléchissante de sorte à réfléchir une partie du faisceau de projection ($F_P$) en direction du deuxième dioptre (L2-A) dudit premier oculaire (14A) et à transmettre l'autre partie en direction de l'autre oculaire, dit deuxième oculaire (14B).

9. Jumelles (10) selon l'une quelconque des revendications 1 à 8, dans lesquelles le ou chaque bloc objectif (12) comprend un axe d'entrée décalé de l'axe de projection ($A_P$) de l'objectif de projection (26) correspondant par un repliement formé de deux dioptres (L1, L2), chaque dioptre (L1, L2) ayant une surface optique plane parallèle à la surface optique plane de l'autre dioptre (L1, L2), le premier dioptre (L1) étant compris dans l'objectif de captation (20), le deuxième dioptre (L2) étant compris dans l'objectif de projection (26) et étant sur le trajet du faisceau réfléchi par le premier dioptre (L1).

10. Jumelles (10) selon l'une quelconque des revendications 1 à 9, dans lesquelles l'image additionnelle est une image de la scène dans une bande spectrale différente de la bande spectrale de l'image captée par l'objectif de captation (20).

## Patentansprüche

1. Nachtsichtfernglas (10), umfassend:

   a. einen oder zwei feste(n) Objektivblock/Objektivblöcke (12), wobei der oder jeder Objektivblock (12) Folgendes umfasst:

   i. ein Aufnahmeobjektiv (20) das konfiguriert ist, um ein Bild einer Szene aufzunehmen,
   ii. eine Vorrichtung zur Lichtverstärkung (22), die konfiguriert ist, um das aufgenommene Bild zu verstärken, um ein verstärktes Bild zu erhalten,
   iii. einen Schirm (24), der geeignet ist, um ein zusätzliches Bild zu erzeugen,
   iv. ein Projektionsobjektiv (26), das konfiguriert ist, um das zusätzliche Bild auf das verstärkte Bild zu projizieren, sodass der Ausgangsstrahl des Projektionsobjektivs (26), bezeichnet als Projektionsstrahl ($F_P$), das resultierende Bild transportiert, wobei das Projektionsobjektiv (26) eine Ausgangsachse, bezeichnet als Projektionsachse ($A_P$), aufweist,

   b. Zwei Okulare (14A, 14B) zum Transport von Bildern, die entweder den gleichen Projektionsstrahl ($F_P$) empfangen, wenn das Fernglas (10) einen einzelnen Objektivblock (12) umfasst, oder verschiedene Projektionsstrahlen ($F_P$), wenn das Fernglas (10) zwei Objektivblöcke (12) umfasst,

   wobei jedes Okular (14A, 14B) eine Ausgangsachse, bezeichnet als Sehachse ($A_V$) aufweist, wobei die Sehachsen ($A_V$) der zwei Okulare (14A, 14B) parallel und durch einen einstellbaren Abstand, bezeichnet als Zwischenpupillenabstand (IPD), getrennt sind, wobei die Sehachse ($A_V$) jedes Okulars (14A, 14B) außerdem parallel zur Projektionsachse ($A_P$) des jeweiligen Objektivblocks (12) verläuft und einen gleichen Mittenabstand (E) von nicht Null zur Projektionsachse ($A_P$) des jeweiligen Objektivblocks (12) aufweist, wobei jedes Okular (14A, 14B) mit Bezug auf die Projektionsachse ($A_P$) des entsprechenden Objektivblocks (12) drehbeweglich ist, um den interpupillären Abstand (IPD) einzustellen.

2. Fernglas (10) nach Anspruch 1, wobei der Projektionsstrahl ($F_P$) ein kollimierter oder nahezu kollimierter Strahl ist.

3. Fernglas (10) nach Anspruch 1 oder 2, wobei die Sehachse ($A_V$) jedes Okulars (14A, 14B) die optische Achse des Okulars (14A, 14B) ist.

4. Fernglas (10) nach einem der Ansprüche 1 bis 3, wobei das Fernglas (10) zwei Objektivblöcke (12) umfasst, wobei der interpupilläre Abstand (IPD) die Summe eines Nennabstands (N) und eines Verstellbereichs (R) ist, wobei der Wert des Verstellbereichs (R) eine Funktion der Drehung jedes Okulars (14A, 14B) ist und innerhalb eines begrenzten Intervalls ([-X; +X]) mit Mittelpunkt Null liegt, wobei der Mittenabstand (E) zwischen der Sehachse (A$_v$) jedes Okulars (14A, 14B) und der Projektionsachse (A$_P$) des entsprechenden Objektivblocks (12) gleich der Hälfte $\left(+\frac{X}{2}\right)$ der positiven Grenze (+X) des begrenzten Intervalls ist.

5. Nachtsichtfernglas (10) nach Anspruch 1 oder 2, wobei jedes Okular (14A, 14B) eine Eintrittsachse aufweist, die mit der Projektionsachse (A$_P$) des entsprechenden Objektivblocks (12) übereinstimmt, wobei die Sehachse (A$_v$) jedes Okulars (14A, 14B) durch eine Faltung, die von zwei Dioptrien (L1', L2'; L1-A, L2-A, L1-B, L2-B) gebildet ist, von der Eintrittsachse des Okulars (14A, 14B) versetzt ist, wobei jede Dioptrie (L1', L2'; L1-A, L2-A, L1-B, L2-B) eine ebene optische Oberfläche aufweist, die parallel zur ebenen optischen Oberfläche der anderen Dioptrie (L1', L2'; L1-A, L2-A, L1-B, L2-B) verläuft, wobei die erste Dioptrie (L1'; L1-A, L1-B) konfiguriert ist, um mindestens einen Teil des Projektionsstrahls in Richtung der zweiten Dioptrie (L2'; L2-A, L2-B) am Ausgang des entsprechenden Objektivblocks (12) zu reflektieren, wobei die zweite Dioptrie (L2'; L2-A, L2-B) konfiguriert ist, um den Projektionsstrahl (F$_P$) in Richtung der Sichtachse (A$_v$) zu reflektieren.

6. Fernglas (10) nach einem der Ansprüche 1, 2 oder 5, wobei der interpupilläre Abstand (IPD) die Summe eines Nennabstands (N) und eines Verstellbereichs (R) als Funktion der Drehung jedes Okulars (14A, 14B) ist wobei der Verstellbereich (R) eine Funktion des Mittenabstands (E) zwischen der Projektionsachse (A$_P$) und der Sehachse (A$_v$) der Okulare (14A, 14B) einer nominalen Ausrichtung (β) der Okulare (14A, 14B) und eines Drehwinkels jedes Okulars (14A, 14B) mit Bezug auf die nominale Ausrichtung (α$_p$ α$_n$ ist.

7. Fernglas (10) nach einem der Ansprüche 1 bis 6, wobei das Fernglas (10) zwei Objektivblöcke (12) umfasst.

8. Fernglas (10) nach Anspruch 5 oder nach Anspruch 6 in Abhängigkeit von Anspruch 5, wobei das Fernglas (10) einen einzelnen Objektivblock (12) umfasst, sodass die Projektionsachse (A$_P$) die gemeinsame Drehachse der zwei Okulare (14A, 14B) ist, wobei die ebene optische Oberfläche der ersten Dioptrie (L1-A) eines der Okulare, bezeichnet als erstes Okular (14A), teilreflektierend ist, um einen Teil des Projektionsstrahls (F$_P$) in Richtung der zweiten Dioptrie (L2-A) des ersten Okulars (14A) zu reflektieren und den anderen Teil in Richtung des anderen Okulars, bezeichnet als zweites Okular (14B), zu übertragen.

9. Fernglas (10) nach einem der Ansprüche 1 bis 8, wobei der oder jeder Objektivblock (12) eine Eingangsachse umfasst, die von der Projektionsachse (A$_P$) des entsprechenden Projektionsobjektivs (26) durch eine Faltung, die von zwei Dioptrien (L1-A) gebildet ist, versetzt ist, wobei jede Dioptrie (L1, L2) eine ebene optische Oberfläche aufweist, die parallel zur ebenen optischen Oberfläche der anderen Dioptrie (L1, L2) verläuft, wobei die erste Dioptrie (L1) im Empfangsobjektiv (20) enthalten ist und die zweite Dioptrie (L2) im Projektionsobjektiv (26) enthalten ist und im Strahlengang liegt, der von der ersten Dioptrie (L1) reflektiert wird.

10. Fernglas (10) nach einem der Ansprüche 1 bis 9, wobei das zusätzliche Bild ein Bild der Szene in einem anderen Spektralband als dem Spektralband des Bildes ist, das vom Aufnahmeobjektiv (20) erfasst wurde.

**Claims**

1. Night-vision binoculars (10), comprising:

    a. one or two fixed lens assemblies (12), the or each lens assembly (12) comprising:

        i. a capture lens (20) configured to capture an image of a scene,
        ii. a light intensification device (22) configured to intensify the image captured in order to obtain an intensified image,
        iii. a screen (24) suited to generate an additional image,
        iv. a projection lens (26) configured to project the additional image on the intensified image such that the output beam of the projection lens (26), called projection beam (F$_P$, transports the resultant image, the projection lens (26) having an output axis, called projection axis (A$_P$),

    b. two image transport eyepieces (14A, 14B) that receive either the same projection beam (F$_P$) when the binoculars (10) comprise a single lens assembly (12), or different projection beams ($F_P$) when the binoculars (10) comprise two lens assemblies (12),

> each eyepiece (14A, 14B) has an output axis, called vision axis ($A_V$), the vision axes ($A_V$) of the two eyepieces (14A, 14B) being parallel and separated by an adjustable distance, called inter-pupillary distance (IPD),
> the vision axis ($A_V$) of each eyepiece (14A, 14B) is further parallel to the projection axis ($A_P$) of the corresponding lens assembly (12) and has the same non-zero centre-to-centre distance (E) as the projection axis ($A_P$) of the corresponding lens assembly (12),
> each eyepiece (14A, 14B) being rotatable relative to the projection axis ($A_P$) of the corresponding lens assembly (12) so as to adjust the inter-pupillary distance (IPD).

2.  Night-vision binoculars (10) according to claim 1, wherein the projection beam ($F_P$) is a collimated or near collimated beam.

3.  Night-vision binoculars (10) according to claim 1 or 2, wherein the vision axis ($A_V$) of each eyepiece (14A, 14B) is the optical axis of the eyepiece (14A, 14B).

4.  Night-vision binoculars (10) according to any of claims 1 to 3, wherein the binoculars (10) comprise two lens assemblies (12), the inter-pupillary distance (IPD) being the sum of a nominal distance (N) and an adjustment range (R), the value of the adjustment range (R) being a function of the rotation of each eyepiece (14A, 14B) and being within a limited range ([-X ; +X]) centred on zero, the centre-to-centre distance (E) between the vision axis ($A_V$) of each eyepiece (14A, 14B) and the projection axis ($A_P$) of the corresponding lens assembly (12) being equal to one-half ($+\dfrac{X}{2}$) of the positive limit (+X) of the limited range.

5.  Night-vision binoculars (10) according to claim 1 or 2, wherein each eyepiece (14A, 14B) has an input axis that coincides with the projection axis (AP) of the corresponding lens assembly (12), wherein the vision axis ($A_V$) of each eyepiece (14A, 14B) is offset from the input axis of the eyepiece (14A, 14B) by a layover formed by two dioptres (L1', L2' ; L1-A, L2-A, L1-B, L2-B), each dioptre (L1', L2' ; L1-A, L2-A, L1-B, L2-B) having a flat optical surface parallel to the flat optical surface of the other dioptre (L1', L2' ; L1-A, L2-A, L1-B, L2-B), wherein the first dioptre (L1'; L1-A, L1-B) is configured to reflect at least part of the projection beam ($F_P$) output by the corresponding lens assembly (12) in the direction of the second dioptre (L2'; L2-A, L2-B), wherein the second dioptre (L2'; L2-A, L2-B) is configured to reflect the projection beam (FP) in the direction of the vision axis ($A_V$).

6.  Night-vision binoculars (10) according to any of claims 1, 2, or 5, wherein the inter-pupillary distance (IPD) is the sum of a nominal distance (N) and an adjustment range (R) that is a function of the rotation of each eyepiece (14A, 14B), wherein the adjustment range (R) is a function of the centre-to-centre distance (E) between the projection axis ($A_P$) and the vision axis ($A_V$) of the eyepieces (14A, 14B), a nominal orientation ($\beta$) of the eyepieces (14A, 14B), and a rotation angle of each eyepiece (14A, 14B) relative to the nominal orientation ($\alpha_p$, $\alpha_n$).

7.  Night-vision binoculars (10) according to any of claims 1 to 6, wherein the binoculars (10) comprise two lens assemblies (12).

8.  Night-vision binoculars (10) according to claim 5 or claim 6 depending on claim 5, wherein the binoculars (10) comprise a single lens assembly (12), such that the projection axis ($A_P$) is the common rotation axis of the two eyepieces (14A, 14B), wherein the flat optical surface of the first dioptre (L1-A) of one of the eyepieces, called first eyepiece (14A), is partially reflective, so as to reflect part of the projection beam ($F_P$) in the direction of the second dioptre (L2-A) of the first eyepiece (14A) and to transmit the other part in the direction of the other eyepiece, called second eyepiece (14B).

9.  Night-vision binoculars (10) according to any of claims 1 to 8, wherein the or each lens assembly (12) comprises an input axis that is offset from the projection axis ($A_P$) of the corresponding projection lens (26) by a layover formed by two dioptres (L1, L2), wherein each dioptre (L1, L2) has a flat optical surface parallel to the flat optical surface of the other dioptre (L1, L2), wherein the first dioptre (L1) is comprised within the capture lens (20), and wherein the second dioptre (L2) is comprised within the projection lens (26) and is in the path of the beam reflected by the first dioptre (L1).

10. Night-vision binoculars (10) according to any of claims 1 to 9, wherein the additional image is an image of the scene in a spectral band different to the spectral band of the image captured by the capture lens (20).

## FIG.1

**FIG.2**

**FIG.3**

FIG.4

## FIG.5

## FIG.6

## FIG.7

## FIG.8

## EP 4 264 351 B1

**Documents brevets cités dans la description**

- US 5282082 A
- US 2018180734 A
- US 2010290112 A